# EUROPÄISCHE PATENTSCHRIFT

(11) **EP 4 621 356 B1**
(45) Veröffentlichungstag und Bekanntmachung des Hinweises auf die Patenterteilung: **06.05.2026**
(21) Anmeldenummer: 24164073.9
(22) Anmeldetag: 18.03.2024
(51) Int. Cl.: G01D 5/244

(54) **VORRICHTUNG ZUM FIXIEREN EINER CODESCHEIBE AN EINEM CODESCHEIBENTRÄGER**
DEVICE FOR FIXING A CODE DISK TO A CODE DISK CARRIER
DISPOSITIF DE FIXATION D'UN DISQUE DE CODE SUR UN SUPPORT DE DISQUE DE CODE

(43) Veröffentlichungstag der Anmeldung: 24.09.2025
(73) Patentinhaber: SICK AG, 79183 Waldkirch (DE)
(72) Erfinder: Renz, Thomas, 78166 Donaueschingen (DE); Fromm, Björn, 78187 Geisingen (DE)
(74) Vertreter: Manitz Finsterwald Patent- und Rechtsanwaltspartnerschaft mbB

(56) Entgegenhaltungen:
- WO-A1-2004/008076
- DE-C1- 3 824 040
- US-A1- 2024 027 235

## Beschreibung

Die vorliegende Erfindung betrifft eine Vorrichtung zum Fixieren einer Codescheibe an einem Codescheibenträger, wobei die Codescheibe eine Ausnehmung aufweist und wobei der Codescheibenträger einen durch die Ausnehmung durchzuführenden Schaftabschnitt und einen von dem Schaftabschnitt ausgehend auskragenden Tragabschnitt mit einer Anlagefläche für die Codescheibe aufweist.

Codescheiben werden beispielsweise bei Drehgebern oder Drehwinkelsensoren zur Erfassung eines Drehwinkels oder einer Winkelstellung eines Bauteils eingesetzt. Hierfür wird die Codescheibe üblicherweise mittels des Codescheibenträgers an einer drehbaren Welle, beispielsweise einer Motorwelle, befestigt. Zum Bestimmen der Winkelstellung der Welle kann zum Beispiel eine Maßverkörperung der Codescheibe durch eine ortsfeste optische Abtastvorrichtung erfasst werden. Die Maßverkörperung kann beispielsweise durch eine Abfolge von transparenten Bereichen und intransparenten Bereichen der Codescheibe gebildet sein.

Bei der Montage einer Codescheiben-Anordnung ist eine exakte Ausrichtung der Codescheibe, insbesondere ein Zentrieren der Maßverkörperung in Bezug auf die Rotationsachse der Welle, erforderlich. Eine endgültige Befestigung der Codescheibe am Codescheibenträger, zum Beispiel durch Kleben, kann erst nach dem Abschluss des Positionierungsvorgangs vorgenommen werden. Die Codescheibe darf während der Positionierung nicht wackeln oder kippen. Sie muss vielmehr in einem Kontakt mit der Anlagefläche gehalten werden. Wenn der Codescheibenträger an einer offenen Hohlwelle befestigt ist, besteht die Möglichkeit, eine Haltevorrichtung in die Hohlwelle einzuschrauben, bis ein an der Haltevorrichtung angeordneter Kontaktstift die Codescheibe mit der gewünschten Kraft gegen die Anlagefläche drückt. Diese Möglichkeit entfällt jedoch bei geschlossenen oder massiven Wellen. US 2024/027235 A1 zeigt eine bekannte Vorrichtung zum Fixieren einer Codescheibe.

Es ist eine Aufgabe der Erfindung, die Montage von Codescheiben an Codescheibenträgern zu vereinfachen und insbesondere eine vorübergehende Fixierung einer Codescheibe an der Anlagefläche eines Codescheibenträgers zu ermöglichen, ohne eine Verschiebung und/oder Drehung der Codescheibe relativ zum Codescheibenträger vollständig zu verhindern.

Die Lösung der Aufgabe erfolgt durch eine Vorrichtung mit den Merkmalen des Anspruchs 1.

Eine erfindungsgemäße Vorrichtung umfasst einen Basiskörper, der eine Achse definiert und wenigstens zwei quer zu der Achse voneinander beabstandet angeordnete Kopplungsabschnitte aufweist, an denen jeweilige Klemmelemente radial verschiebbar gelagert sind, eine Verstelleinrichtung, mittels welcher die Klemmelemente für einen koppelnden Eingriff mit dem zwischen den Kopplungsabschnitten befindlichen Schaftabschnitt des Codescheibenträgers auf die Achse zu bewegbar sind, und wenigstens ein Kontaktelement, das axial verschiebbar am Basiskörper gelagert und in Richtung einer ausgefahrenen Stellung vorspannbar ist, um bei mit dem Codescheibenträger gekoppelten Basiskörper die Codescheibe mittels Beaufschlagung durch das Kontaktelement gegen die Anlagefläche zu drücken.

Durch eine Bewegung der Klemmelemente auf die Achse zu kann der Basiskörper von außen am Schaftabschnitt des Codescheibenträgers festgelegt werden. Ein Eingriff in eine Hohlwelle ist hierfür nicht erforderlich. Nach dem Festklemmen oder während des Festklemmens des Basiskörpers am Codescheibenträger kann das Kontaktelement mit einer gewünschten Kraft vorgespannt werden, um die Codescheibe an der Anlagefläche des Codescheibenträgers zu fixieren, also einen flächigen Kontakt zwischen der Codescheibe und dem Codescheibenträger beizubehalten. Die vorspannende Kraft kann hierbei derart gewählt sein, dass trotz der Fixierung an der Anlagefläche eine manuelle Drehung der Codescheibe und/oder eine seitliche Verschiebung der Codescheibe relativ zum Codescheibenträger möglich ist.

Das Vorspannen des Kontaktelements in Richtung der ausgefahrenen Stellung kann manuell erfolgen, beispielsweise durch Drehen einer Schraube. Vorzugsweise ist das Kontaktelement jedoch durch eine Federeinrichtung in die ausgefahrene Stellung vorgespannt. Die Federkonstante kann gerade so gewählt sein, dass sich die gewünschte Haltekraft ergibt. Aufgrund der dauerhaften Vorspannung durch die Federeinrichtung ist keine aktive Verschiebung des Kontaktelements erforderlich.

Die Verstelleinrichtung kann ein Stellelement umfassen, das axial verschiebbar am Basiskörper geführt ist und über jeweilige Keilflächen mit den Klemmelementen zusammenwirkt, um eine axiale Bewegung des Stellelements in radiale Bewegungen der Klemmelemente umzusetzen. Dadurch dass das Stellelement nicht radial verschiebbar sein muss, kann der von der Vorrichtung in radialer Richtung beanspruchte Bauraum minimiert werden. Eine Bewegungsumsetzung über Keilflächen ermöglicht einen besonders einfachen Aufbau der Verstelleinrichtung.

Gemäß einer Ausführungsform der Erfindung weist die Verstelleinrichtung ein Schraubgetriebe auf, mittels welchem das Stellelement gegenüber dem Basiskörper verschiebbar ist. Dies ermöglicht eine besonders einfache Konstruktion.

Bevorzugt weist das Schraubgetriebe ein manuelles Betätigungselement, insbesondere einen Drehgriff, auf. Die Verstelleinrichtung kann bei dieser Ausgestaltung ohne Werkzeug bedient werden.

Gemäß einer weiteren Ausführungsform der Erfindung weist die Verstelleinrichtung eine Rückstellfeder auf, welche das Stellelement in eine Lösestellung vorspannt, in welcher die Klemmelemente nicht durch die Keilflächen des Stellelements beaufschlagt sind. Die Verklemmung zwischen dem Basiskörper und dem Codescheibenträger kann somit auf schnelle und zuverlässige Weise wieder gelöst werden.

Das Stellelement kann einen Hülsenabschnitt aufweisen, in welchem der Basiskörper aufgenommen ist. Dies ermöglicht eine besonders kompakte Bauform, insbesondere in radialer Richtung.

Die Keilflächen können an jeweiligen Steuerabschnitten ausgebildet sein, die in axialer Richtung von einer Stirnseite des Hülsenabschnitts abstehen. Die in Umfangsrichtung zwischen den Steuerabschnitten bestehenden Freiräume sind insofern günstig, als in diesen Bereichen ein ungehinderter Zugang zur Codescheibe bis zum Schaftabschnitt des Codescheibenträgers möglich ist, beispielsweise für eine im Rahmen einer Verklebung durchzuführende Bestrahlung.

Damit auch durch die Kopplungsabschnitte der Zugang zur Codescheibe nur minimal behindert wird, können die Steuerabschnitte in Umfangsrichtung die gleiche Ausdehnung aufweisen wie die Kopplungsabschnitte.

Eine spezielle Ausgestaltung der Erfindung sieht vor, dass die Klemmelemente kugelförmig sind und in zylindrischen Aufnahmen der Kopplungsabschnitte angeordnet sind. Dies ermöglicht ein besonders zuverlässiges und gleichzeitig leichtgängiges Verstellen.

Es kann vorgesehen sein, dass der Basiskörper eine ebene Anschlagfläche für eine Anlage an den Codescheibenträger aufweist und die Kopplungsabschnitte in axialer Richtung von der ebenen Anschlagfläche abstehen. Die Anschlagfläche erleichtert eine exakte axiale Positionierung des Basiskörpers. Aufgrund der abstehenden Kopplungsabschnitte wird der Schaftabschnitt des Codescheibenträgers durch die Kopplungsabschnitte gewissermaßen umgriffen, wenn sich die Anschlagfläche in Anlage an eine Stirnseite des Schaftabschnitts befindet.

Eine weitere Ausführungsform der Erfindung sieht vor, dass der Basiskörper wenigstens drei, bevorzugt genau drei, quer zu der Achse voneinander beabstandet angeordnete Kopplungsabschnitte aufweist, an denen jeweilige Klemmelemente radial verschiebbar gelagert sind, wobei die Kopplungsabschnitte auf einem Kreis, vorzugsweise gleichmäßig verteilt, angeordnet sind, durch dessen Mittelpunkt die Achse verläuft. Dies ermöglicht bei einfacher Gestaltung eine ausreichend gleichmäßige Verteilung der Klemmkraft.

Gemäß einer weiteren Ausgestaltung der Erfindung sind wenigstens zwei, bevorzugt wenigstens drei und besonders bevorzugt genau drei Kontaktelemente axial verschiebbar am Basiskörper gelagert und in Richtung einer ausgefahrenen Stellung vorspannbar, wobei die Kopplungsabschnitte auf einem Kreis, vorzugsweise gleichmäßig verteilt, angeordnet sind, durch dessen Mittelpunkt die Achse verläuft. Dies gewährleistet eine gleichmäßige Verteilung der Haltekraft.

Bevorzugt ist jedes der Kontaktelemente mittig zwischen zwei Kopplungsabschnitten angeordnet. Es ist dann nicht nötig, einen Kopplungsabschnitt und ein Kontaktelement radial hintereinander anzuordnen. Somit ergibt sich eine besonders kompakte Bauweise.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: ist eine perspektivische Ansicht einer Anordnung aus einer Welle, einem Codescheibenträger, einer Codescheibe und einer Vorrichtung zum Fixieren der Codescheibe an dem Codescheibenträger.
- Fig. 2: zeigt die Anordnung gemäß Fig. 1 von der Seite.
- Fig. 3: ist eine Schnittansicht der Anordnung gemäß Fig. 2.
- Fig. 4: ist eine vergrößerte Teilansicht der Anordnung gemäß Fig. 3.
- Fig. 5: ist eine Draufsicht auf einen Teil der Anordnung gemäß Fig. 1.

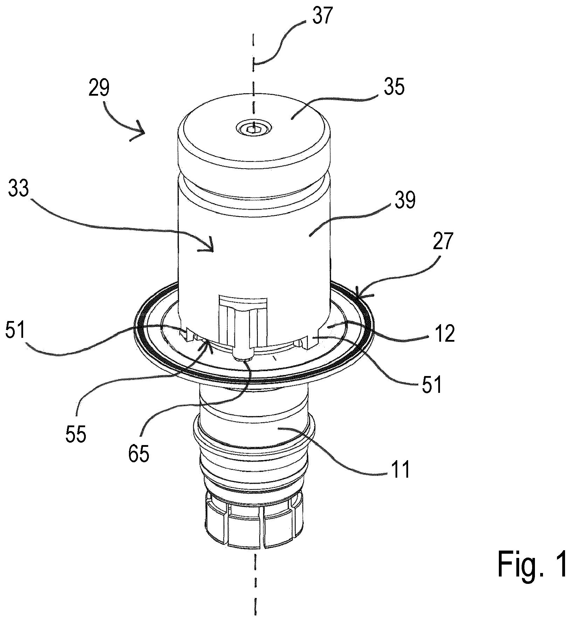

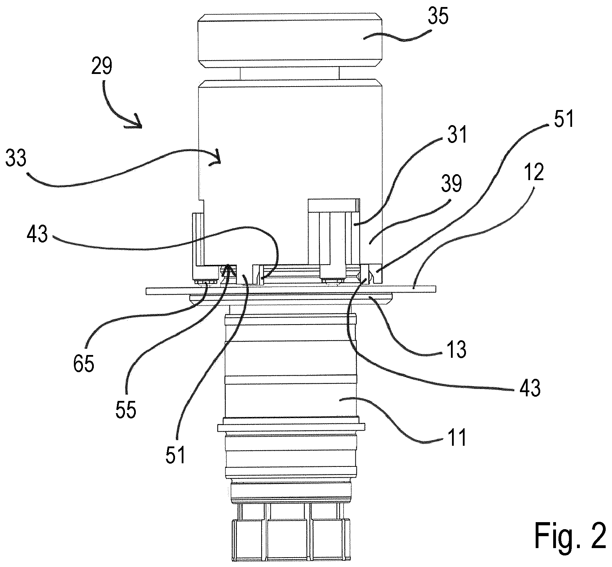

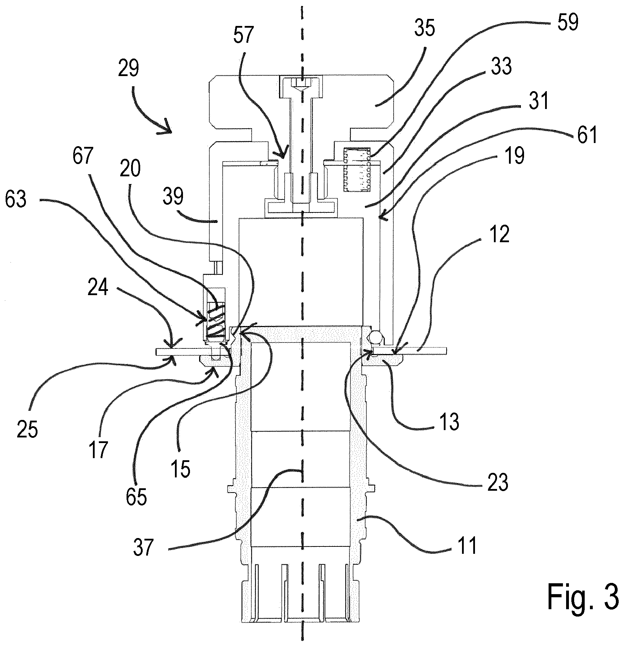

In Fig. 1 bis 3 ist eine rotierende Welle 11, beispielsweise eine Motorwelle, und eine antriebswirksam mit dieser zu verbindende Codescheibe 12 gezeigt. Die Codescheibe 12 ist von einem in Fig. 2 und 3 erkennbaren Codescheibenträger 13 gehalten, der antriebswirksam mit der Welle 11 verbunden ist, beispielsweise durch Verpressen. Wie in Fig. 3 erkennbar weist der Codescheibenträger 13 einen zumindest im wesentlichen zylindrischen Schaftabschnitt 15 sowie einen bezogen auf den Schaftabschnitt 15 seitlich auskragenden Tragabschnitt 17 auf. An dem Tragabschnitt 17 ist eine ebene, hier ringförmige, Anlagefläche 19 ausgebildet. An dem Schaftabschnitt 15 ist eine umlaufende Nut 20 ausgebildet, die bei dem dargestellten Ausführungsbeispiel einen V-förmigen Querschnitt aufweist.

Die Codescheibe 12 weist eine zentrale Durchführung 23 sowie zwei entgegengesetzte ebene Flachseiten 24, 25 auf. Weiterhin weist die Codescheibe 21 eine Maßverkörperung 27 (Fig. 1) auf, die zum Beispiel durch eine Abfolge von transparenten Bereichen und intransparenten Bereichen gebildet ist. Für eine antriebswirksame Verbindung der Codescheibe 12 mit der Welle 11 wird die Codescheibe 12 mit dem Codescheibenträger 13 verklebt. Zur Erleichterung des Verklebens ist eine erfindungsgemäße Vorrichtung 29 zum vorübergehenden Fixieren der Codescheibe 12 am Codescheibenträger 13 vorgesehen, die nachfolgend näher beschrieben wird.

Die Vorrichtung 29 weist einen Basiskörper 31, ein Stellelement 33 und einen Drehgriff 35 auf. Der Basiskörper 31 weist eine zylindrische Grundgestalt auf und definiert insofern eine Achse 37, die während des bestimmungsgemäßen Gebrauchs der Vorrichtung 29 mit der Rotationsachse der Welle 11 zusammenfällt. Das Stellelement 33 weist einen Hülsenabschnitt 39 auf, in welchem der Basiskörper 31 aufgenommen ist (siehe zum Beispiel die Schnittansicht der Fig. 3).

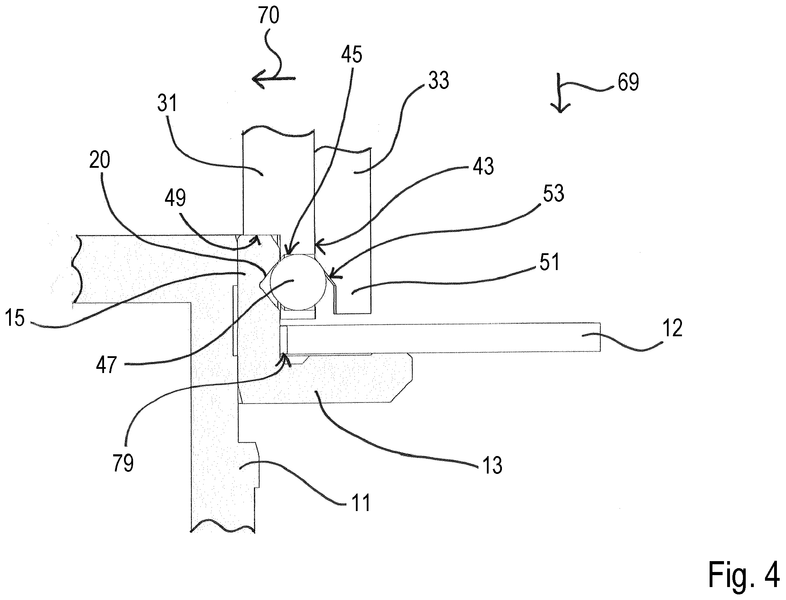

An einem dem Drehgriff 35 entgegengesetzten Endbereich des Basiskörpers 31 befinden sich drei Kopplungsabschnitte 43, die quer zu der Achse 37 voneinander beabstandet sind und zylindrische Aufnahmen 45 (Fig. 4) aufweisen. In den Aufnahmen 45 befinden sich kugelförmige Klemmelemente 47. Da die Aufnahmen 45 rechtwinklig zu der Achse 37 verlaufen, sind die Klemmelemente 47 bezüglich der Achse 37 radial verschiebbar. Die Kopplungsabschnitte 43 stehen in axialer Richtung von einer ebenen Anschlagfläche 49 des Basiskörpers 31 ab. Durch eine radiale Bewegung der Klemmelemente 47 in einer Kopplungsrichtung 70 nach innen, also auf die Achse 37 zu, kann der Basiskörper 31 am Codescheibenträger 13 festgeklemmt werden, wenn sich dessen Schaftabschnitt 15 zwischen den Kopplungsabschnitten 43 befindet. Bei dem dargestellten Ausführungsbeispiel ergibt sich zusätzlich zur Klemmwirkung auch eine formschlüssige Kopplung, weil die Klemmelemente 47 in die Nut 20 des Codescheibenträgers 13 eingreifen.

Die radiale Bewegung der Klemmelemente 47 wird über eine axiale Bewegung des Stellelements 33 gesteuert. Zur Umsetzung einer axialen Bewegung des Stellelements 33 in synchrone radiale Bewegungen der Klemmelemente 47 sind an dem Stellelement 33 drei Steuerabschnitte 51 vorgesehen, an denen Keilflächen 53 ausgebildet sind. Die Steuerabschnitte 51 stehen in axialer Richtung von einer Stirnseite 55 (Fig. 1 und 2) des Hülsenabschnitts 39 ab und sind so ausgerichtet, dass sie mit den Kopplungsabschnitten 43 überlappen. Somit befinden sich die Keilflächen 53 der Steuerabschnitte 51 in einem Kontakt mit den Klemmelementen 47.

Zur axialen Verschiebung des Stellelements 33 relativ zum Basiskörper 31 ist ein Schraubgetriebe 57 (Fig. 3) vorgesehen, das über den Drehgriff 35 manuell betätigbar ist. Eine Anordnung aus Rückstellfedern 59 dient dazu, das Stellelement 33 in eine Lösestellung vorzuspannen, in welcher die Klemmelemente 47 nicht durch die Keilflächen 53 des Stellelements 33 beaufschlagt sind.

An der Außenseite 61 des Basiskörpers 31 befinden sich drei Führungsaufnahmen 63, in denen jeweilige Kontaktelemente 65 axial verschiebbar gelagert sind. Mittels jeweiliger Federeinrichtungen, hier in Form von Druckfedern 67, sind die Kontaktelemente 65 in eine ausgefahrene Stellung vorgespannt.

Für eine antriebswirksame Verbindung des Codescheibenträgers 13 mit der Welle 11 wird der Codescheibenträger 13 auf die Welle 11 aufgepresst. Zur Befestigung der Codescheibe 12 am Codescheibenträger 13 wird danach ein Klebstoff auf die im Bild untere Flachseite 25 der Codescheibe 12 und/oder auf die Anlagefläche 19 des Codescheibenträgers 13 aufgetragen. Die Codescheibe 12 wird dann in einen flächigen Kontakt mit den Anlagefläche 19 gebracht, wobei der Schaftabschnitt 15 des Codescheibenträgers 13 durch die zentrale Durchführung 23 der Codescheibe 12 durchgeführt wird. Anschließend wird die Vorrichtung 29 auf den Codescheibenträger 13 aufgesetzt, wobei die Anschlagfläche 49 des Basiskörpers 31 am oberen Ende des Schaftabschnitts 15 anschlägt. Dann wird das Schraubgetriebe 57 über den Drehgriff 35 so betätigt, dass sich das Stellelement 33 relativ zum Basiskörper 31 in eine axiale Stellrichtung 69 bewegt, die gemäß Fig. 1 bis 4 nach unten weist. Die Keilflächen 53 der Steuerabschnitte 51 drücken hierbei die Klemmelemente 47 in der Kopplungsrichtung 70 gegen den Schaftabschnitt 15 und in die Nut 20 hinein. Die Vorrichtung 29 ist in diesem Zustand sicher am Codescheibenträger 13 verriegelt.

Die Kontaktelemente 65 sind derart gestaltet und angeordnet, dass sie im verriegelten Zustand der Vorrichtung 29 aufgrund der Federkraft der Druckfedern 67 die Codescheibe 12 gegen die Anlagefläche 19 drücken. Die Kraft der Druckfedern 67 ist derart gewählt, dass trotz des ausgeübten Drucks ein manuelles Verdrehen der Codescheibe 12 gegenüber dem Codescheibenträger 13 oder ein geringfügiges radiales Verschieben der Codescheibe 12 gegenüber dem Codescheibenträger 13 unter Ausnutzung des radialen Spiels 79 möglich ist. Beispielsweise kann die Federkraft im Bereich zwischen 0,2 N und 5 N liegen. Ein Monteur kann in diesem Zustand eine exakte Justierung der Codescheibe 12 vornehmen, gegebenenfalls unter Verwendung eines Mikroskops.

Nach Abschluss der Justierung wird der Klebstoff ausgehärtet. Beispielsweise kann es sich um einen durch ultraviolettes Licht (UV-Licht) härtbaren Klebstoff handeln, der mittels einer nicht dargestellten UV-Bestrahlungseinheit beleuchtet wird. Die Codescheibe 12 kann hierfür aus einem für UV-Licht transparenten Material gefertigt sein. Da die Kopplungsabschnitte 43, die Steuerabschnitte 51 und die Kontaktelemente 65 bezogen auf die Umfangsrichtung nur relativ schmal sind, gibt es nur eine geringfügige Abschattung des zu bestrahlenden Klebstoffbereichs.

Nach dem Aushärten des Klebstoffs wird das Schraubgetriebe 57 in entgegengesetzter Richtung betätigt, wobei die Rückstellfedern 59 dafür sorgen, dass eine ungehinderte automatische Bewegung des Stellelements 33 in die Lösestellung erfolgt. Die Vorrichtung 29 kann dann vom Codescheibenträger 13 abgenommen werden. Die Anordnung aus der Welle 11, dem Codescheibenträger 13 und der daran befestigten Codescheibe 21 kann anschließend in einem Drehgeber, Motor oder dergleichen verbaut werden.

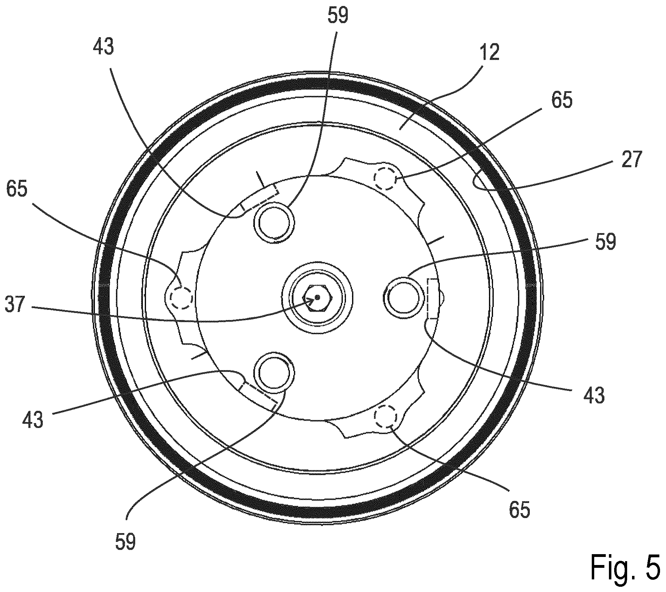

Wie in der Draufsicht gemäß Fig. 5 erkennbar ist, sind die Kopplungsabschnitte 43, die Kontaktelemente 65 und die Rückstellfedern 59 jeweils konzentrisch zur Achse 37 und in Umfangsrichtung gleichmäßig verteilt angeordnet, um eine gleichmäßige Kraftausübung zu gewährleisten.

Die erfindungsgemäße Vorrichtung 29 erleichtert die Montage der Codescheibe 12, indem sie diese vorübergehend so am Codescheibenträger 13 fixiert, dass ein Justiervorgang möglich ist. Da der Kopplungseingriff der Vorrichtung 29 über den Schaftabschnitt 15 des Codescheibenträgers 13 von außen erfolgt, kann die Vorrichtung 29 auch eingesetzt werden, wenn die Welle 11 wie dargestellt als geschlossene Welle ausgeführt ist.

### Bezugszeichenliste

- 11: Welle
- 12: Codescheibe
- 13: Codescheibenträger
- 15: Schaftabschnitt
- 17: Tragabschnitt
- 19: Anlagefläche
- 20: Nut
- 23: zentrale Durchführung
- 24: obere Flachseite
- 25: untere Flachseite
- 27: Maßverkörperung
- 29: Vorrichtung zum Fixieren der Codescheibe am Codescheibenträger
- 31: Basiskörper
- 33: Stellelement
- 35: Drehgriff
- 37: Achse
- 39: Hülsenabschnitt
- 43: Kopplungsabschnitt
- 45: Aufnahme
- 47: Klemmelement
- 49: Anschlagfläche
- 51: Steuerabschnitt
- 53: Keilfläche
- 55: Stirnseite
- 57: Schraubgetriebe
- 59: Rückstellfeder
- 61: Außenseite
- 63: Führungsaufnahme
- 65: Kontaktelement
- 67: Druckfeder
- 69: Stellrichtung
- 70: Kopplungsrichtung
- 79: Spiel

## Patentansprüche

1. Vorrichtung (29) zum Fixieren einer Codescheibe (12) an einem Codescheibenträger (13), wobei die Codescheibe (12) eine Ausnehmung (23) aufweist und wobei der Codescheibenträger (13) einen durch die Ausnehmung (23) durchzuführenden Schaftabschnitt (15) und einen von dem Schaftabschnitt (15) ausgehend auskragenden Tragabschnitt (17) mit einer Anlagefläche (19) für die Codescheibe (12) aufweist,
wobei die Vorrichtung (29) umfasst:
einen Basiskörper (31), der eine Achse (37) definiert und wenigstens zwei quer zu der Achse (37) voneinander beabstandet angeordnete Kopplungsabschnitte (43) aufweist, an denen jeweilige Klemmelemente (47) radial verschiebbar gelagert sind,
eine Verstelleinrichtung, mittels welcher die Klemmelemente (47) für einen koppelnden Eingriff mit dem zwischen den Kopplungsabschnitten (43) befindlichen Schaftabschnitt (15) des Codescheibenträgers (13) auf die Achse (37) zu bewegbar sind, und
wenigstens ein Kontaktelement (65), das axial verschiebbar am Basiskörper (31) gelagert und in Richtung einer ausgefahrenen Stellung vorspannbar ist, um bei mit dem Codescheibenträger (13) gekoppeltem Basiskörper (31) die Codescheibe (12) mittels Beaufschlagung durch das Kontaktelement (65) gegen die Anlagefläche (19) zu drücken.

2. Vorrichtung nach Anspruch 1,
wobei das Kontaktelement (65) durch eine Federeinrichtung (67) in die ausgefahrene Stellung vorgespannt ist.

3. Vorrichtung nach Anspruch 1 oder 2,
wobei die Verstelleinrichtung ein Stellelement (33) umfasst, das axial verschiebbar am Basiskörper (31) geführt ist und über jeweilige Keilflächen (53) mit den Klemmelementen (47) zusammenwirkt, um eine axiale Bewegung des Stellelements (33) in radiale Bewegungen der Klemmelemente (47) umzusetzen.

4. Vorrichtung nach Anspruch 3,
wobei die Verstelleinrichtung ein Schraubgetriebe (57) aufweist, mittels welchem das Stellelement (33) gegenüber dem Basiskörper (31) verschiebbar ist.

5. Vorrichtung nach Anspruch 4,
wobei das Schraubgetriebe (57) ein manuelles Betätigungselement, insbesondere einen Drehgriff (35), aufweist.

6. Vorrichtung nach einem der Ansprüche 3 bis 5,
wobei die Verstelleinrichtung eine Rückstellfeder (59) aufweist, welche das Stellelement (33) in eine Lösestellung vorspannt, in welcher die Klemmelemente (47) nicht durch die Keilflächen (53) des Stellelements (33) beaufschlagt sind.

7. Vorrichtung nach einem der Ansprüche 3 bis 6,
wobei das Stellelement (33) einen Hülsenabschnitt (39) aufweist, in welchem der Basiskörper (31) aufgenommen ist.

8. Vorrichtung nach Anspruch 7,
wobei die Keilflächen (53) an jeweiligen Steuerabschnitten (51) ausgebildet sind, die in axialer Richtung von einer Stirnseite (55) des Hülsenabschnitts (39) abstehen.

9. Vorrichtung nach Anspruch 8,
wobei die Steuerabschnitte (51) in Umfangsrichtung die gleiche Ausdehnung aufweisen wie die Kopplungsabschnitte (43).

10. Vorrichtung nach einem der vorstehenden Ansprüche,
wobei die Klemmelemente (47) kugelförmig sind und in zylindrischen Aufnahmen (45) der Kopplungsabschnitte (43) angeordnet sind.

11. Vorrichtung nach einem der vorstehenden Ansprüche,
wobei der Basiskörper (31) eine ebene Anschlagfläche (49) für eine Anlage an den Codescheibenträger (13) aufweist und die Kopplungsabschnitte (43) in axialer Richtung von der ebenen Anschlagfläche (49) abstehen.

12. Vorrichtung nach einem der vorstehenden Ansprüche,
wobei der Basiskörper (31) wenigstens drei, bevorzugt genau drei, quer zu der Achse (37) voneinander beabstandet angeordnete Kopplungsabschnitte (43) aufweist, an denen jeweilige Klemmelemente (47) radial verschiebbar gelagert sind, wobei die Kopplungsabschnitte (43) auf einem Kreis, vorzugsweise gleichmäßig verteilt, angeordnet sind, durch dessen Mittelpunkt die Achse (37) verläuft.

13. Vorrichtung nach einem der vorstehenden Ansprüche,
wobei wenigstens zwei, bevorzugt wenigstens drei und besonders bevorzugt genau drei Kontaktelemente (65) axial verschiebbar am Basiskörper (31) gelagert und mittels jeweiliger Federeinrichtungen (67) in Richtung einer ausgefahrenen Stellung vorspannbar sind, wobei die Kontaktelemente (65) auf einem Kreis, vorzugsweise gleichmäßig verteilt, angeordnet sind, durch dessen Mittelpunkt die Achse (37) verläuft.

14. Vorrichtung nach einem der vorstehenden Ansprüche,
wobei jedes der Kontaktelemente (65) mittig zwischen zwei Kopplungsabschnitten (43) angeordnet ist.

## Claims

1. An apparatus (29) for fixing a code disk (12) to a code disk carrier (13), wherein the code disk (12) has a recess (23) and wherein the code disk carrier (13) has a shaft section (15) to be guided through the recess (23) and a support section (17) projecting starting from the shaft section (15) and having a contact surface (19) for the code disk (12),
wherein the apparatus (29) comprises:
a base body (31) which defines an axis (37) and which has at least two coupling sections (43) which are arranged spaced apart from one another transversely to the axis (37) and at which respective clamping elements (47) are radially displaceably supported,
an adjustment device by means of which the clamping elements (47) can be moved towards the axis (37) for a coupling engagement with the shaft section (15) of the code disk carrier (13), said shaft section being located between the coupling sections (43), and
at least one contact element (65) which is axially displaceably supported at the base body (31) and which can be preloaded towards an extended position in order, when the base body (31) is coupled to the code disk carrier (13), to press the code disk (12) against the contact surface (19) by means of an action by the contact element (65).

2. An apparatus according to claim 1,
wherein the contact element (65) is preloaded into the extended position by a spring device (67).

3. An apparatus according to claim 1 or 2,
wherein the adjustment device comprises an adjustment element (33) which is axially displaceably guided at the base body (31) and which cooperates with the clamping elements (47) via respective wedge surfaces (53) in order to convert an axial movement of the adjustment element (33) into radial movements of the clamping elements (47).

4. An apparatus according to claim 3,
wherein the adjustment device has a screw gear (57) by means of which the adjustment element (33) can be displaced relative to the base body (31).

5. An apparatus according to claim 4,
wherein the screw gear (57) has a manual actuation element, in particular a rotary handle (35).

6. An apparatus according to any one of the claims 3 to 5,
wherein the adjustment device has a return spring (59) which preloads the adjustment element (33) into a release position in which the clamping elements (47) are not acted on by the wedge surfaces (53) of the adjustment element (33).

7. An apparatus according to any one of the claims 3 to 6,
wherein the adjustment element (33) has a sleeve section (39) in which the base body (31) is received.

8. An apparatus according to claim 7,
wherein the wedge surfaces (53) are formed at respective control sections (51) which project in an axial direction from an end face (55) of the sleeve section (39).

9. An apparatus according to claim 8,
wherein the control sections (51) have the same extent in the peripheral direction as the coupling sections (43).

10. An apparatus according to any one of the preceding claims,
wherein the clamping elements (47) are spherical and are arranged in cylindrical receivers (45) of the coupling sections (43).

11. An apparatus according to any one of the preceding claims,
wherein the base body (31) has a planar stop surface (49) for a contact with the code disk carrier (13) and the coupling sections (43) project in an axial direction from the planar stop surface (49).

12. An apparatus according to any one of the preceding claims,
wherein the base body (31) has at least three, preferably exactly three, coupling sections (43) which are arranged spaced apart from one another transversely to the axis (37) and at which respective clamping elements (47) are radially displaceably supported, wherein the coupling sections (43) are arranged, preferably in a uniformly distributed manner, on a circle through whose center the axis (37) extends.

13. An apparatus according to any one of the preceding claims,
wherein at least two, preferably at least three and particularly preferably exactly three contact elements (65) are axially displaceably supported at the base body (31) and can be preloaded towards an extended position by means of respective spring devices (67), wherein the contact elements (65) are arranged, preferably in a uniformly distributed manner, on a circle through whose center the axis (37) extends.

14. An apparatus according to any one of the preceding claims,
wherein each of the contact elements (65) is arranged centrally between two coupling sections (43).

## Revendications

1. Dispositif (29) destiné à fixer un disque de code (12) sur un support de disque de code (13), le disque de code (12) présentant un évidement (23) et le support de disque de code (13) comportant une partie formant tige (15) à faire passer à travers l'évidement (23) et une partie porteuse (17) en porte-à-faux à partir de la partie formant tige (15) et munie d'une surface d'appui (19) pour le disque de code (12),
le dispositif (29) comprenant :
un corps de base (31) qui définit un axe (37) et comporte au moins deux parties de couplage (43) espacées l'une de l'autre transversalement à l'axe (37), sur lesquelles sont montés des éléments de serrage respectifs (47) de manière mobile radialement,
un dispositif de déplacement permettant de déplacer les éléments de serrage (47) vers l'axe (37) pour venir en prise de couplage avec la partie formant tige (15) du support de disque de code (13) située entre les parties de couplage (43), et
au moins un élément de contact (65) qui est monté sur le corps de base (31) de manière mobile axialement et qui peut être précontraint en direction d'une position déployée afin de presser le disque de code (12) contre la surface d'appui (19) au moyen d'une sollicitation exercée par l'élément de contact (65), lorsque le corps de base (31) est couplé au support de disque de code (13).

2. Dispositif selon la revendication 1,
dans lequel l'élément de contact (65) est précontraint vers la position déployée par un dispositif à ressort (67).

3. Dispositif selon la revendication 1 ou 2,
dans lequel le dispositif de déplacement comprend un élément de positionnement (33) qui est guidé sur le corps de base (31) de manière mobile axialement et qui coopère avec les éléments de serrage (47) par l'intermédiaire de surfaces en coin respectives (53) afin de convertir un mouvement axial de l'élément de positionnement (33) en mouvements radiaux des éléments de serrage (47).

4. Dispositif selon la revendication 3,
dans lequel le dispositif de déplacement comporte un mécanisme à vis (57) permettant de déplacer l'élément de positionnement (33) par rapport au corps de base (31).

5. Dispositif selon la revendication 4,
dans lequel le mécanisme à vis (57) comporte un élément d'actionnement manuel, en particulier une poignée tournante (35).

6. Dispositif selon l'une des revendications 3 à 5,
dans lequel le dispositif de déplacement comporte un ressort de rappel (59) qui précontraint l'élément de positionnement (33) vers une position de desserrage dans laquelle les éléments de serrage (47) ne sont pas sollicités par les surfaces en coin (53) de l'élément de positionnement (33).

7. Dispositif selon l'une des revendications 3 à 6,
dans lequel l'élément de positionnement (33) comporte une partie formant douille (39) dans laquelle est logé le corps de base (31).

8. Dispositif selon la revendication 7,
dans lequel les surfaces en coin (53) sont formées sur des parties de commande respectives (51) qui font saillie dans la direction axiale à partir d'une face frontale (55) de la partie formant douille (39).

9. Dispositif selon la revendication 8,
dans lequel les parties de commande (51) ont, dans le sens circonférentiel, la même extension que les parties de couplage (43).

10. Dispositif selon l'une des revendications précédentes,
dans lequel les éléments de serrage (47) sont de forme sphérique et sont disposés dans des logements cylindriques (45) des parties de couplage (43).

11. Dispositif selon l'une des revendications précédentes,
dans lequel le corps de base (31) présente une surface de butée plane (49) destinée à venir en appui contre le support de disque de code (13), et les parties de couplage (43) font saillie dans la direction axiale à partir de la surface de butée plane (49).

12. Dispositif selon l'une des revendications précédentes,
dans lequel le corps de base (31) comporte au moins trois, de préférence précisément trois, parties de couplage (43) espacées les unes des autres transversalement à l'axe (37), sur lesquelles sont montés des éléments de serrage respectifs (47) de manière mobile radialement, les parties de couplage (43) étant disposées sur un cercle, de préférence en étant réparties uniformément, dont le centre est traversé par l'axe (37).

13. Dispositif selon l'une des revendications précédentes,
dans lequel au moins deux, de préférence au moins trois et de manière particulièrement préférée précisément trois éléments de contact (65) sont montés sur le corps de base (31) de manière mobile axialement et peuvent être précontraints en direction d'une position déployée au moyen de dispositifs à ressort respectifs (67), les éléments de contact (65) étant disposés sur un cercle, de préférence en étant répartis uniformément, dont le centre est traversé par l'axe (37).

14. Dispositif selon l'une des revendications précédentes,
dans lequel chacun des éléments de contact (65) est disposé au centre entre deux parties de couplage (43).
